# EUROPEAN PATENT APPLICATION

(11) **EP 4 553 318 A1**
(43) Date of publication of application: **14.05.2025**
(21) Application number: 23834769.4
(22) Date of filing: 30.06.2023
(51) Int. Cl.: F04B 39/12, B60R 13/08

(54) **COVERING BODY, COMPRESSOR AND VEHICLE**

(30) Priority: 05.07.2022 CN 202221735042 U
(71) Applicant: BYD Company Limited, Shenzhen, Guangdong 518118 (CN)
(72) Inventor: LI, Huan, Shenzhen, Guangdong 518118 (CN); AI, Li, Shenzhen, Guangdong 518118 (CN); TIAN, Lijuan, Shenzhen, Guangdong 518118 (CN); LUO, Guofeng, Shenzhen, Guangdong 518118 (CN)
(74) Representative: Mathys & Squire
(86) International application number: PCT/CN2023/104945
(87) International publication number: WO 2024/008002

(57) **Abstract**

A vehicle, having a covering body which is applied to a compressor. The compressor includes a compressor controller and a compressor body, wherein the compressor controller is arranged on the compressor body, and the covering body at least partially covers the compressor controller.

## Description

### CROSS-REFERENCE TO RELATED APPLICATIONS

The present disclosure claims the priority to patent application number 2022217350426 filed on July 5, 2022, entitled "COVERING BODY, COMPRESSOR AND VEHICLE", the entire contents of which are incorporated herein by reference.

### FIELD

The present disclosure relates to the technical field of compressors, and in particular to a covering body, a compressor and a vehicle.

### BACKGROUND

In recent years, people have higher and higher requirements with respect to the comfort and vibration noise of vehicles with the popularization of new energy vehicles. Compared with traditional fuel vehicles, new energy vehicles have no engine noise, which puts higher requirements on NVH performance. Among the many parts generating noise in a vehicle, the vehicle air conditioning system is one of the components causing significant noise. The compressor is the main excitation source of automotive air conditioning NVH, so how to effectively solve the compressor NVH is one of the key factors. The uncomfortable noise outside the vehicle generated by the compressor during operation is mainly concentrated in the mid-high frequency range (above 1000Hz), and the acoustic package has a very good noise reduction effect on the noise in this frequency range, so the amount of noise reduction can be greatly improved by the acoustic package design.

The existing acoustic package design for automotive air conditioning compressors, whether single-layered or multi-layered, is divided into upper and lower or left and right sections, and combined with a planar structure. These structures cannot be completely contacted with each other during the actual installation process, resulting in gaps and limited noise reduction effects.

### SUMMARY

The present disclosure aims to solve at least one of the technical problems existing in the prior art. Therefore, an object of the present disclosure is to propose a covering body that can effectively absorb or isolate the noise generated by the compressor.

The present disclosure proposes a compressor comprising the above-mentioned covering body.

The present disclosure also proposes a vehicle comprising the above-mentioned compressor.

The covering body according to the present disclosure is applied to a compressor, wherein the compressor comprising: a compressor controller and a compressor body, and the compressor controller is arranged on the compressor body, wherein the covering body at least partially covers the compressor controller.

The covering body according to the present disclosure, at least partially covers the compressor controller, thereby the noise generated by the compressor is effectively absorbed or isolated, and the noise reduction capability is greatly improved.

In one example of the present disclosure, the covering body is constructed as an integral molded part.

In one example of the present disclosure, the covering body includes: a first covering portion and a second covering portion, wherein the first covering portion and the second covering portion define a housing cavity, and the compressor controller is at least partially disposed in the housing cavity.

In one example of the present disclosure, volumes defined by the first covering portion and the second covering portion are different.

In one example of the present disclosure, the opening of the first covering portion and the opening of the second covering portion are opposite to each other, and the first covering portion and the second covering portion press against each other.

In one example of the present disclosure, a first mating end face and a second mating end face mating with each other are arranged on the first covering portion and the second covering portion, wherein a first protrusion portion is arranged on the first mating end face, and a first recessed portion mating with the first protrusion portion is arranged on the second mating end face.

In one example of the present disclosure, the first protrusion portions and the first recessed portions are both constructed in plurality, a plurality of the first protrusion portions are spaced apart in the thickness direction of the covering body, and a plurality of the first recessed portions are spaced apart in the thickness direction of the covering body.

In one example of the present disclosure, the cross-section of the first protrusion portion is configured as a rectangle, a triangle or a semicircle.

In one example of the present disclosure, the height of the first protrusion portion protruding from the first mating end face is h, which satisfies: h ≥ 4 mm.

In one example of the present disclosure, the covering body includes a first covering layer and a second covering layer, wherein the first covering layer covers the compressor controller, and the second covering layer covers the first covering layer.

In one example of the present disclosure, a hardness of the second covering layer is greater than a hardness of the first covering layer, and a thickness of the second covering layer is less than a thickness of the first covering layer.

In one example of the present disclosure, the first covering layer includes a third covering portion and a fourth covering portion, wherein a third mating end face and a fourth mating end face mating with each other are arranged on the third covering portion and the fourth covering portion.

In one example of the present disclosure, the second covering layer includes a fifth covering portion and a sixth covering portion, wherein a fifth mating end face and a sixth mating end face mating with each other are arranged on the fifth covering portion and the sixth covering portion.

In one example of the present disclosure, a mating surface of the third covering portion and the fourth covering portion does not coincide with a mating surface of the fifth covering portion and the sixth covering portion.

In one example of the present disclosure, an angle between the third mating end face or the fourth mating end face and the fifth mating end face or the sixth mating end face is α, which satisfies: 0° < α ≤ 90°.

In one example of the present disclosure, the third mating end face and the fourth mating end face have a first mating surface, the fifth mating end face and the sixth mating end face have a second mating surface, and a distance between the first mating surface and the second mating surface is d0, which satisfies: d0 ≥ 4 mm.

In one example of the present disclosure, two first mating segments parallel to each other are arranged between the third mating end face and the fourth mating end face, two second mating segments parallel to each other are arranged between the fifth mating end face and the sixth mating end face, the two first mating segments and the two second mating segments are respectively located on an outer peripheral wall of the first covering layer and an outer peripheral wall of the second covering layer, and each of the first mating segments and each of the second mating segments are parallel to each other; wherein a distance between the first mating segment and the second mating segment on the same side is d1, which satisfies: d1 ≥ 4 mm.

In one example of the present disclosure, a flange portion covering outer edges of the fifth mating end face and the sixth mating end face is arranged on the fifth covering portion and/or the sixth covering portion, and the width of the flange portion is d2, which satisfies: d2 ≥ 4 mm.

In one example of the present disclosure, the first covering layer is constructed as a multi-layer, and a plurality of the first covering layers are stacked on each other in the thickness direction; or/and the second covering layer is a multi-layer, and a plurality of the second covering layers are stacked on each other in the thickness direction.

In one example of the present disclosure, an intermediate layer is arranged between the first covering layer and the second covering layer.

A compressor, comprising the above-mentioned covering body.

A vehicle, comprising the above-mentioned compressor.

Additional aspects and advantages of the present disclosure will be partially presented in the following description, some of which will be obvious from the following description or understood by practice of the present disclosure.

### BRIEF DESCRIPTION OF THE DRAWINGS

The above and/or additional aspects and advantages of the present disclosure will be obvious and easily understood from the description of the examples in conjunction with the following drawings, wherein:
FIG. 1 is a schematic diagram of a covering body according to a first example of the present disclosure in one direction;
FIG. 2 is a partial enlarged schematic diagram of circle A in FIG. 1;
FIG. 3 is a schematic diagram of a covering body according to a second example of the present disclosure in one direction;
FIG. 4 is a partial enlarged schematic diagram of circle B in FIG. 3;
FIG. 5 is a cross-sectional view of a first covering layer and a second covering layer according to a third example of the present disclosure;
FIG. 6 is an exploded view of a covering body according to a third example of the present disclosure;
FIG. 7 is a compressor according to an example of the present disclosure; and
FIG. 8 is a vehicle according to an example of the present disclosure.

### Figure numerals:

Covering body 100, first covering portion 101, first mating end face 101a, first protrusion portion 101b, second covering portion 102, second mating end face 102a, first recessed portion 102b, housing cavity 108;
First covering layer 110, third covering portion 103, third mating end face 103a, fourth covering portion 104, fourth mating end face 104a;
Second covering layer 120, fifth covering portion 105, fifth mating end face 105a, sixth covering portion 106, sixth mating end face 106a, flange portion 107;
Vehicle 10000; compressor 1000; compressor controller 200, compressor body 300.

### DETAILED DESCRIPTION

Examples of the present disclosure are described below in detail, illustrations of which are shown in the accompanying drawings, wherein the same or similar reference numerals from beginning to the end represent the same or similar elements or elements having the same or similar functions. The examples described below with reference to the accompanying drawings are exemplary and are only intended to explain the present disclosure, but should not be construed as a limitation on the present disclosure.

The covering body 100 according to the example of the present disclosure can be applied to a compressor 1000, wherein the compressor 1000 comprises a compressor controller 200 and a compressor body 300. The compressor controller 200 is the primary source of noise, so the entire compressor 1000 or at least the compressor controller 200 can be covered by the covering body 100.

Specifically, the compressor controller 200 is arranged on the compressor body 300, and the covering body 100 at least partially covers the compressor controller 200. That is to say, the covering body 100 can cover the entire compressor controller 200, and of course can also cover a portion of the compressor controller 200, as long as the covering body 100 covers on the compressor controller 200 to reduce the noise generated by the compressor controller 200.

The covering body 100 according to the example of the present disclosure can at least partially cover the compressor controller 200, thereby the noise generated by the compressor 1000 is effectively absorbed or isolated and the noise reduction capability is greatly improved.

### First Example

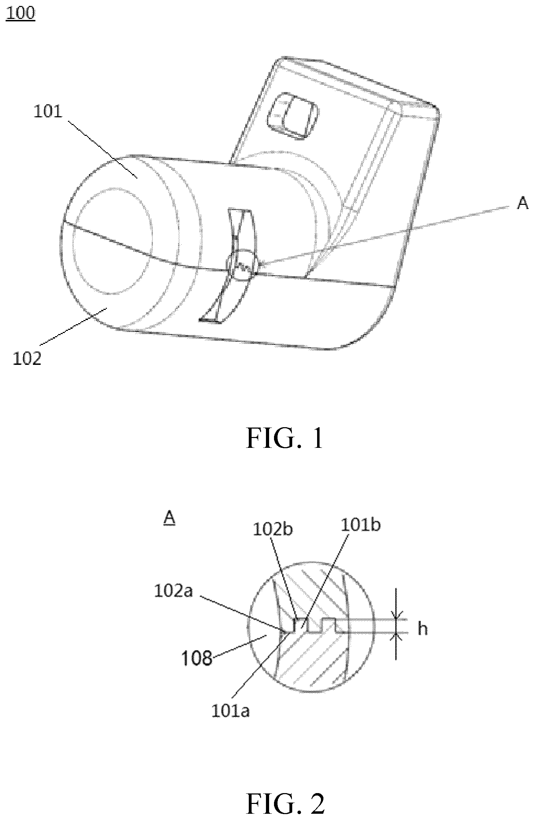

In this example, as shown in FIGS. 1 and 2, the covering body 100 comprises a first covering portion 101 and a second covering portion 102, wherein the first covering portion 101 and the second covering portion 102 define a housing cavity 108, and the compressor controller 200 is at least partially disposed in the housing cavity 108. The first covering portion 101 and the second covering portion 102 are of a split structure. Since the covering body 100 is constructed as a structure similar to a rotating body, the covering body 100 is divided into the first covering portion 101 and the second covering portion 102 for processing and assembling, which can greatly improve the installation efficiency of the covering body 100 installing on the compressor controller 200.

Volumes of the first covering portion 101 and the second covering portion 102 can be the same. The first covering portion 101 is one half of the covering body 100, and the second covering portion 102 is the other half of the covering body 100. Therefore, the processing of the first covering portion 101 and the second covering portion 102 is easier. If the covering body 100 is a symmetrical rotating body, only one mold is required to process the first covering portion 101 and the second covering portion 102 at the same time.

It should be noted that the covering body 100 can also be constructed as an integral molded part, so the structure of the covering body 100 is simplified, which makes producing and processing easier, thereby the production efficiency of the covering body 100 is greatly improved. In addition, the strength of the covering body 100 is also improved to a certain extent.

It should be noted that the volumes defined by the first covering portion 101 and the second covering portion 102 can also be different, and the first covering portion 101 and the second covering portion 102 with different volumes can meet a variety of different manufacturing processes; therefore, the first covering portion 101 and the second covering portion 102 with different volumes can be manufactured according to the needs.

Furthermore, the opening of the first covering portion 101 and the opening of the second covering portion 102 are opposite to each other, and at the same time, the open end of the first covering portion 101 and the open end of the second covering portion 102 cooperate with each other, that is, the first covering portion 101 and the second covering portion 102 press against each other, so that the first covering portion 101 and the second covering portion 102 jointly define the housing cavity 108.

In this example, as shown in FIG. 2, a first mating end face 101a and a second mating end face 102a mating with each other are arranged on the first covering portion 101 and the second covering portion 102, wherein a first protrusion portion 101b is arranged on the first mating end face 101a, and a first recessed portion 102b mating with the first protrusion portion 101b is arranged on the second mating end face 102a. As a result, the contact area between the first mating end face 101a and the second mating end face 102a is greatly improved, and the possibility of the noise generated by the compressor controller 200 leaking from between the first mating end face 101a and the second mating end face 102a is reduced.

The first protrusion portions 101b and the first recessed portions 102b can both be constructed in plurality, each of the first protrusion portions 101b is mated with the corresponding first recessed portions 102b, and a plurality of first protrusion portions 101b are spaced apart from each other; thus, when a plurality of first protrusion portions 101b and a plurality of first recessed portions 102b are mated, portions of the first mating end face 101a and portions of the second mating end face 102a are staggered to form a maze-like staggered structure, thereby the sealing performance between the first mating end face 101a and the second mating end face 102a is improved, and the possibility of the noise generated by the compressor controller 200 leaking from between the first mating end face 101a and the second mating end face 102a is greatly reduced.

It can be understood that a plurality of the first protrusion portions 101b are spaced apart in the thickness direction of the covering body 100, and a plurality of the first recessed portions 102b are spaced apart in the thickness direction of the covering body 100. The thickness direction of the covering body 100 is the inside-outside direction of the covering body 100. A plurality of the first protrusion portions 101b are spaced apart in the thickness direction of the covering body 100, and a plurality of the first recessed portions 102b are spaced apart in the thickness direction of the covering body 100, which can effectively reduce the amount of noise generated by the compressor controller 200 inside the covering body 100 and transmitted to the outside of the covering body 100.

Specifically, the cross-section of the first protrusion 101b is configured as a rectangle, a triangle or a semicircle. The sealing performance between the first mating end face 101a and the second mating end face 102a is directly or indirectly affected by the cross-sectional shape of the first protrusion portion 101b. The first protrusion portion 101b or the first recessed portion 102b with different cross-sectional shapes can be selected according to the needs.

In this example, as shown in FIG. 2, the height of the first protrusion portion 101b protruding from the first mating end face 101a is h, which satisfies: h ≥ 4 mm. After multiple experiments, the inventors found that the noise reduction effect can be improved by at least 2 dB when h ≥ 4 mm.

### Second Example

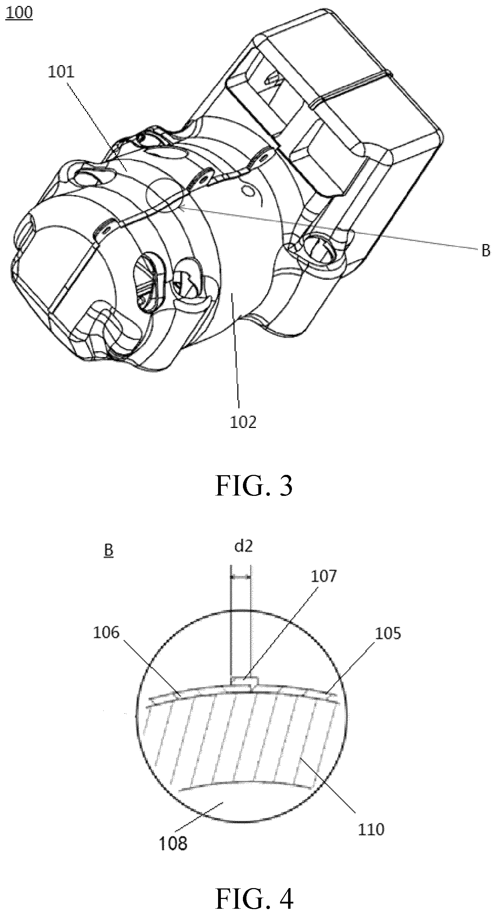

Referring to FIGS. 3 and 4, the covering body 100 comprises a first covering portion 101 and a second covering portion 102, wherein the first covering portion 101 and the second covering portion 102 define a housing cavity 108, and the compressor controller 200 is at least partially disposed in the housing cavity 108. The first covering portion 101 and the second covering portion 102 are of a split structure. Volumes of the first covering portion 101 and the second covering portion 102 are the same. The first covering portion 101 is one half of the covering body 100, and the second covering portion 102 is the other half of the covering body 100.

It should be noted that in this example the covering body 100 can also be constructed as an integral molded part, and the volumes of the first covering portion 101 and the second covering portion 102 can also be different. A thickness of the covering body 100 in this example is smaller than that of the covering body 100 in the first example, and a hardness of the covering body 100 in this example is greater than that of the covering body 100 in the first example.

It should be noted that the covering bodies in the first example and the second example can be covered on the outside of the compressor 1000 separately, which can also play the effect of reducing the noise of the compressor 1000.

### Third Example

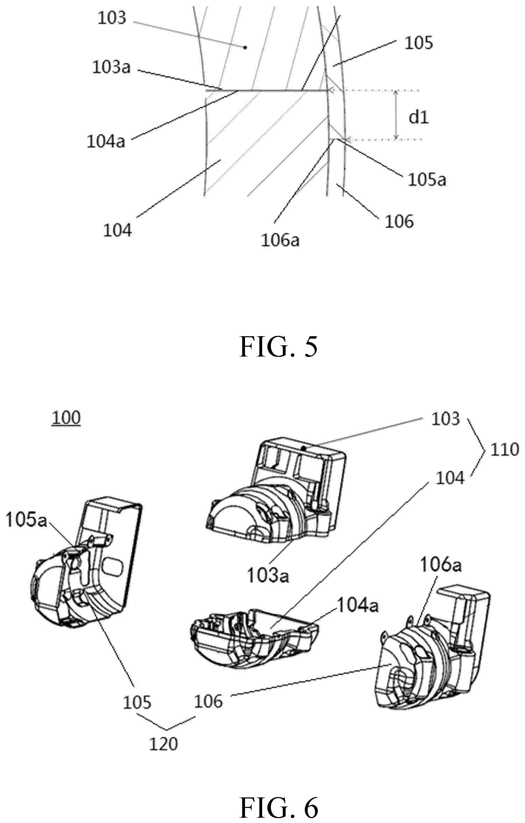

As shown in FIG. 6, the covering body 100 comprises a first covering layer 110 and a second covering layer 120, wherein the first covering layer 110 covers the compressor controller 200, and the second covering layer 120 covers the first covering layer 110. That is to say, the covering body 100 can be a double-layered structure, so the first covering layer 110 and the second covering layer 120 can jointly reduce the noise generated by the compressor controller 200. The first covering layer 110 has the same structure as the covering body 100 in the first example, and the second covering layer 120 has the same structure as the covering body 100 in the second example.

Furthermore, a hardness of the second covering layer 120 is greater than a hardness of the first covering layer 110, and a thickness of the second covering layer 120 is less than a thickness of the first covering layer 110. The first covering layer 110 can be a sound absorbing layer, and the second covering layer 120 can be a sound insulating layer. The first covering layer 110 can be made of a flexible material, such as a sound absorbing sponge, etc., and the second covering layer 120 can be constructed as a hard plastic layer. For double-layered or multi-layered covering layers, the outer layer structure can still play an effective sound insulation role when the inner layer structure has an acoustic leak.

In this example, as shown in FIGS. 5 and 6, the first covering layer 110 comprises a third covering portion 103 and a fourth covering portion 104, and a third mating end face 103a and a fourth mating end face 104a mating with each other are arranged on the third covering portion 103 and the fourth covering portion 104. That is to say, the structure of the inner layer in the covering body 100 is also formed by the abutment of two halves, and the third covering portion 103 and the fourth covering portion 104 are of a split structure. Since the first covering layer 110 is constructed as a structure similar to a rotating body, the first covering layer 110 is divided into the third covering portion 103 and the fourth covering portion 104 for processing and assembling, which can greatly improve the installation efficiency of the first covering layer 110 on the compressor controller 200. Specifically, the third mating end face 103a is arranged on the third covering portion 103, and the fourth mating end face 104a is arranged on the fourth covering portion 104. When the third covering portion 103 and the fourth covering portion 104 are assembled, the third mating end face 103a and the fourth mating end face 104a are in contact with each other. Optionally, a mating surfaces of the third mating end face 103a and the fourth mating end face 104a can be a flat surface or a mating concave-convex surface.

Furthermore, the second covering layer 120 comprises a fifth covering portion 105 and a sixth covering portion 106, and a fifth mating end face 105a and a sixth mating end face 106a mating with each other are arranged on the fifth covering portion 105 and the sixth covering portion 106. That is to say, the structure of the inner layer in the covering body 100 is also formed by the abutment of two halves, and the fifth covering portion 105 and the sixth covering portion 106 are of a split structure. Since the second covering layer 120 is constructed as a structure similar to a rotating body, the second covering layer 120 is divided into the fifth covering portion 105 and the sixth covering portion 106 for processing and assembling, which can greatly improve the installation efficiency of the second covering layer 120 on the first covering layer 110. Specifically, the fifth mating end face 105a is arranged on the fifth covering portion 105, and the sixth mating end face 106a is arranged on the sixth covering portion 106. When the fifth covering portion 105 and the sixth covering portion 106 are assembled, the fifth mating end face 105a or the sixth mating end face 106a are in contact with each other. Optionally, a mating surface of the fifth mating end face 105a or the sixth mating end face 106a can be a flat surface or a mating concave-convex surface.

In this example, as shown in FIGS. 5 and 6, the mating surface of the third covering portion 103 and the fourth covering portion 104 does not coincide with the mating surface of the fifth covering portion 105 and the sixth covering portion 106. That is to say, the mating surface between the third covering portion 103 and the fourth covering portion 104 and the mating surface between the fifth covering portion 105 and the sixth covering portion 106 are staggered with each other. As shown in FIG. 6, the mating surface between the third covering portion 103 and the fourth covering portion 104 is arranged horizontally, and the mating surface between the fifth covering portion 105 and the sixth covering portion 106 is arranged vertically. Therefore, even if the sound inside the first covering layer 110 leaks out from between the third covering part 103 and the fourth covering part 104, it will not directly enter between the fifth covering part 105 and the sixth covering part 106, and the sound can be further consumed between the first covering layer 110 and the second covering layer 120.

In some examples of the present disclosure, an angle between the third mating end face 103a or the fourth mating end face 104a and the fifth mating end face 105a or the sixth mating end face 106a is α (not shown in the figures), which satisfies: 0° < α ≤ 90°. That is to say, the mating gap between the third covering portion 103 and the fourth covering portion 104 is not opposite to the mating gap between the fifth covering portion 105 and the sixth covering portion 106, and the two gaps are staggered in the circumferential direction, thereby the directly transmitting of the noise of the compressor controller 200 through the gap is effectively avoided. According to experimental data, the noise reduction effect of this solution can be improved by more than 1 dB.

For example, as shown in FIG. 6, the third covering portion 103 and the fourth covering portion 104 can be opposite in the up and down directions, and the third mating end face 103a and the fourth mating end face 104a extend in the horizontal direction; the fifth covering portion 105 and the sixth covering portion 106 can be opposite in the horizontal direction, and the fifth mating end face 105a and the sixth mating end face 106a extend in the vertical direction.

In some examples of the present disclosure, the third mating end face 103a and the fourth mating end face 104a have a first mating surface, the fifth mating end face 105a and the sixth mating end face 106a have a second mating surface, and a distance between the first mating surface and the second mating surface is d0, which satisfies: d0 ≥ 4 mm. It should be noted that the first mating surface refers to a contact mating surface between the third mating end face 103a and the fourth mating end face 104a, the second mating surface refers to a contact mating surface between the fifth mating end face 105a and the sixth mating end face 106a, and the distance between the first mating surface and the second mating surface refers to a distance between any point on the first mating surface and any point on the second mating surface. After multiple experiments and based on the experimental data, the inventors found that the noise reduction effect had been improved by more than 2 dB when d0 ≥ 4 mm.

In this example, as shown in FIG. 5, two first mating segments parallel to each other are arranged between the third mating end face 103a and the fourth mating end face 104a, two second mating segments parallel to each other are arranged between the fifth mating end face 105a and the sixth mating end face 106a, the two first mating segments and the two second mating segments are respectively located on an outer peripheral wall of the first covering layer 110 and an outer peripheral wall of the second covering layer 120, and each of the first mating segments and each of the second mating segments are parallel to each other; wherein a distance between the first mating segment and the second mating segment on the same side is d1, which satisfies: d1 ≥ 4 mm. After multiple experiments and based on the experiments data, the inventors found that the noise reduction effect had been improved by more than 2 dB when d1 ≥ 4 mm.

In some examples of the present disclosure, as shown in FIG. 4, a flange portion 107 covering outer edges of the fifth mating end face 105a and the sixth mating end face 106a is arranged on the fifth covering portion 105 and/or the sixth covering portion 106, and the width of the flange portion 107 is d2, which satisfies: d2 ≥ 4 mm. Therefore, the sealing gap between the fifth covering portion 105 and the sixth covering portion 106 can be stopped by the flange portion 107, further improving the noise reduction effect of the covering body 100.

According to some examples of the present disclosure, an intermediate layer is arranged between the first covering layer 110 and the second covering layer 120. That is to say, the first covering layer 110, the intermediate layer and the second covering layer 120 are constructed like a sandwich structure, and the intermediate layer is sandwiched between the first covering layer 110 and the second covering layer 120. The material of the intermediate layer can be the same as that of the first covering layer 110, and of course can also be the same as that of the second covering layer 120. The intermediate layer can be constructed as a sound-absorbing layer to further absorb the sound that is not absorbed by the first covering layer 110; the intermediate layer can also be constructed as a sound-insulating layer. If the first covering layer 110 fails to completely absorb and consume the sound, the leaked sound can be first insulated by the intermediate layer, and then only the sound leaked from the intermediate layer needs to be further insulated by the second covering layer 120. Therefore, even if the sound is not completely absorbed and dissipated by the first covering layer 110, the leaked sound can be insulated or the energy can be consumed by the intermediate layer, therefore the sound-absorbing and sound-isolating effect of the covering body 100 is further increased.

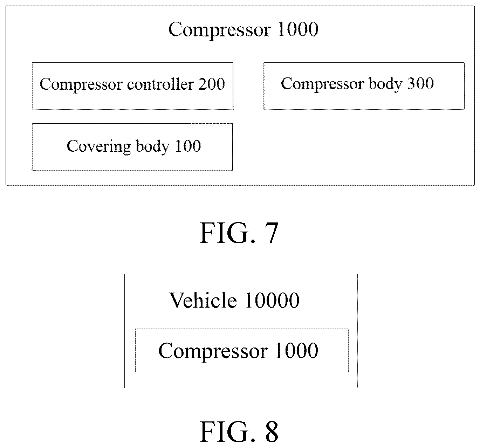

The compressor 1000 according to the example of the present disclosure is described briefly below with reference to FIG. 7.

The compressor 1000 according to the example of the present disclosure comprises the above-mentioned covering body 100. Since the above-mentioned covering body 100 is arranged on the compressor 1000 according to the present disclosure, the amount of noise of the compressor 1000 can be greatly reduced, and the NVH performance of the vehicle 10000 is improved.

The vehicle 10000 according to the example of the present disclosure is described briefly below with reference to FIG. 8.

According to the example of the present disclosure, the vehicle 10000 comprises the above-mentioned compressor 1000. Since the above-mentioned compressor 1000 is arranged on the vehicle 10000 according to the example of the present disclosure, the noise of the compressor 1000 is significantly controlled, the NVH performance of the whole vehicle is improved, and the overall quality of the vehicle 10000 is improved.

In the description of this specification, reference to terms such as "one example", "some examples", "illustrative example", "example", "specific example", or "some examples" means that the specific features, structures, materials or characteristics described in conjunction with the example or example are included in at least one example or example of the present disclosure. In this specification, the exemplary expressions of the above terms do not necessarily refer to the same example or example. Furthermore, the specific features, structures, materials, or characteristics described may be combined in any suitable manner in any one or more examples or examples.

Although examples of the present disclosure have been shown and described, a person skilled in the art will appreciate that various changes, modifications, substitutions and alterations may be made to the examples without departing from the principles and spirit of the present disclosure, the scope of which is defined by the claims and their equivalents.

## Claims

1. A covering body (100) applied to a compressor (1000), the compressor (1000) comprising: a compressor controller (200) and a compressor body (300), the compressor controller (200) being arranged on the compressor body (300), wherein the covering body (100) at least partially covers the compressor controller (200).

2. The covering body (100) according to claim 1, wherein the covering body (100) is constructed as an integral molded part.

3. The covering body (100) according to claim 1, wherein the covering body (100) comprises: a first covering portion (101) and a second covering portion (102), the first covering portion (101) and the second covering portion (102) define a housing cavity (108), and the compressor controller (200) is at least partially disposed in the housing cavity (108).

4. The covering body (100) according to claim 3, wherein volumes defined by the first covering portion (101) and the second covering portion (102) are different.

5. The covering body (100) according to claim 3 or 4, wherein an opening of the first covering portion (101) and an opening of the second covering portion (102) are opposite to each other, and the first covering portion (101) and the second covering portion (102) press against each other.

6. The covering body (100) according to claim 5, wherein a first mating end face (101a) and a second mating end face (102a) mating with each other are arranged on the first covering portion (101) and the second covering portion (102), a first protrusion portion (101b) is arranged on the first mating end face (101a), and a first recessed portion (102b) mating with the first protrusion portion (101b) is arranged on the second mating end face (102a).

7. The covering body (100) according to claim 6, wherein the first protrusion portions (101b) and the first recessed portions (102b) are both constructed in plurality, a plurality of the first protrusion portions (101b) are spaced apart in the thickness direction of the covering body (100), and a plurality of the first recessed portions (102b) are spaced apart in the thickness direction of the covering body (100).

8. The covering body (100) according to claim 6 or 7, wherein the cross-section of the first protrusion portion (101b) is configured as a rectangle, a triangle or a semicircle.

9. The covering body (100) according to any one of claims 6 to 8, wherein the height of the first protrusion portion (101b) protruding from the first mating end face (101a) is h, which satisfies: h ≥ 4 mm.

10. The covering body (100) according to any one of claims 1 and 3 to 9, wherein the covering body (100) comprises a first covering layer (110) and a second covering layer (120), the first covering layer (110) covers the compressor controller (200), and the second covering layer (120) covers the first covering layer (110).

11. The covering body (100) according to claim 10, wherein a hardness of the second covering layer (120) is greater than a hardness of the first covering layer (110), and a thickness of the second covering layer (120) is less than a thickness of the first covering layer (110).

12. The covering body (100) according to claim 10 or 11, wherein the first covering layer (110) comprises a third covering portion (103) and a fourth covering portion (104), and a third mating end face (103a) and a fourth mating end face (104a) mating with each other are arranged on the third covering portion (103) and the fourth covering portion (104).

13. The covering body (100) according to claim 12, wherein the second covering layer (120) comprises a fifth covering portion (105) and a sixth covering portion (106), and a fifth mating end face (105a) and a sixth mating end face (106a) mating with each other are arranged on the fifth covering portion (105) and the sixth covering portion (106).

14. The covering body (100) according to claim 13, wherein a mating surface of the third covering portion (103) and the fourth covering portion (104) does not coincide with a mating surface of the fifth covering portion (105) and the sixth covering portion (106).

15. The covering body (100) according to claim 13 or 14, wherein an angle between the third mating end face (103a) or the fourth mating end face (104a) and the fifth mating end face (105a) or the sixth mating end face (106a) is α, which satisfies: 0° < α ≤ 90°.

16. The covering body (100) according to any one of claims 13 to 15, wherein the third mating end face (103a) and the fourth mating end face (104a) have a first mating surface, the fifth mating end face (105a) and the sixth mating end face (106a) have a second mating surface, and a distance between the first mating surface and the second mating surface is d0, which satisfies: d0 ≥ 4 mm.

17. The covering body (100) according to claim 13 or 14, wherein two first mating segments parallel to each other are arranged between the third mating end face (103a) and the fourth mating end face (104a), two second mating segments parallel to each other are arranged between the fifth mating end face (105a) and the sixth mating end face (106a), the two first mating segments and the two second mating segments are respectively located on an outer peripheral wall of the first covering layer (110) and an outer peripheral wall of the second covering layer (120), and either of the first mating segments and either of the second mating segments are parallel to each other; wherein a distance between the first mating segment and the second mating segment on the same side is d1, which satisfies: d1 ≥ 4 mm.

18. The covering body (100) according to any one of claims 13 to 17, wherein a flange portion (107) covering outer edges of the fifth mating end face (105a) and the sixth mating end face (106a) is arranged on the fifth covering portion (105) and/or the sixth covering portion (106), and the width of the flange portion (107) is d2, which satisfies: d2 ≥ 4 mm.

19. The covering body (100) according to any one of claims 10 to 18, wherein the first covering layer (110) is constructed as a multi-layer, and a plurality of the first covering layers (110) are stacked on each other in the thickness direction; or/and the second covering layer (120) is a multi-layer, and a plurality of the second covering layers (120) are stacked on each other in the thickness direction.

20. The covering body (100) according to any one of claims 10 to 19, wherein an intermediate layer is arranged between the first covering layer (110) and the second covering layer (120).

21. A compressor (1000), comprising the covering body (100) according to any one of claims 1 to 20.

22. A vehicle (10000), comprising the compressor (1000) according to claim 21.
